# EUROPÄISCHE PATENTSCHRIFT

(11) **EP 3 260 325 B1**
(45) Veröffentlichungstag und Bekanntmachung des Hinweises auf die Patenterteilung: **12.06.2019**
(21) Anmeldenummer: 17165892.5
(22) Anmeldetag: 11.04.2017
(51) Int. Cl.: B60K 28/14

(54) **VERFAHREN UND VORRICHTUNG ZUR VERHINDERUNG EINES ÜBERSCHLAGS EINES ZWEIRAD**
METHOD AND APPARATUS FOR PREVENTING A ROLLOVER OF A BICYCLE
PROCÉDÉ ET DISPOSITIF DESTINÉS À ÉVITER UN CAPOTAGE D'UN DEUX ROUES

(30) Priorität: 20.06.2016 DE 102016210928
(43) Veröffentlichungstag der Anmeldung: 27.12.2017
(73) Patentinhaber: Robert Bosch GmbH, 70442 Stuttgart (DE)
(72) Erfinder: Klug, Silas, 71106 Magstadt (DE); Faust, Arno, 72131 Ofterdingen (DE); Dasbach, Gregor, 72074 Tuebingen (DE); Greiner, Rinaldo, 72762 Reutlingen (DE); Widmaier, Georg, 71296 Heimsheim (DE); Donotek, Michael, 71679 Asperg (DE); Wienss, Andreas, 72800 Eningen Unter Achalm (DE); Moia, Alessandro, 71088 Holzgerlingen (DE)

(56) Entgegenhaltungen:
- DE-A1-102005 018 484

## Beschreibung

### Stand der Technik

Beim Betrieb eines Fahrrads kann es bei unsachgemäßer Betätigung der Bremse leicht zu einem Überschlag des Fahrrads kommen, indem die Verzögerung durch das Vorderrad im Bezug zur Geschwindigkeit und/oder der Masse bzw. deren Verteilung auf dem Fahrrad zu hoch gewählt wird. Um diese Gefährdung zu beheben, besteht die Möglichkeit, die Bremskraft an den Rädern an die Geschwindigkeit bzw. an die Masse anzupassen. Alternativ wäre zu überlegen, wie die Massenverteilung auf dem Fahrrad geändert werden kann, um ein Abheben des Hinterrads bzw. ein Überschlag zu verhindern.

Aus der Schrift US 8 342 552 B1 ist ein Verfahren bzw. eine Vorrichtung bekannt, mittels dem die Sattelenstellung eines Zweirads in Abhängigkeit einer Bergauf- und/oder Bergabfahrt während der Fahrt automatisch eingestellt werden kann.

Aus der Schrift DE 10 2014 216671 A1 ist ein Verfahren und eine Vorrichtung bekannt, bei der in Abhängigkeit der Erkennung eines drohenden Überschlags ein Gegendrehmoment an dem abhebenden Rad erzeugt wird.

Aus der Schrift DE 10 2005 018 484 A1, welche als nächstliegender Stand der Technik angesehen wird, ist ein Verfahren nach der Präambel des Anspruchs 1 und eine Vorrichtung zur Ausführung dieses Verfahrens bekannt. Das Dokument offenbart eine Erkennung des Abhebens des Hinterrades durch einen am Fahrzeugaufbau vorgesehenen Drehratensensor der die Winkelgeschwindigkeit des Fahrzeugaufbaus um eine Fahrzeugquerachse misst.

### Offenbarung der Erfindung

In der vorliegenden Erfindung wird ein Verfahren sowie eine Vorrichtung beansprucht, die einen Überschlag eines Zweirads im Betrieb verhindert oder zumindest abschwächt. Hierzu wird zunächst eine sicherheitskritische Situation, z.B. ein bevorstehender Überschlag bzw. zumindest ein Abheben des Hinterrads erkannt, indem eine Drehbewegung um die Querachse des Zweirads ermittelt wird. Falls eine ausreichende Drehbewegung erkannt wird, z.B. indem ein Abheben des Hinterrads prognostiziert wird oder die Drehbewegung einen vorgegebenen Schwellenwert überschreitet, wird eine Maßnahme eingeleitet, die die Drehbewegung abschwächt oder verhindert. Dies kann beispielsweise durch die Veränderung der Massenverteilung auf oder an dem Zweirad erreicht werden.

Die Veränderung der Massenverteilung kann dabei durch eine Verschiebung des Gewichts auf und/oder am Gepäckträger erreicht werden. Hierzu sind Aktuatoren vorgesehen, die beispielsweise das Gepäck und/oder den Akku eines Elektrofahrrads weiter nach außen und/oder nach unten in Richtung der Fahrbahn bewegt. Hierdurch wird der Massenschwerpunkt und auch das Trägheitsmoment erhöht, so dass die Drehbewegung langsamer erfolgt oder im Extremfall aufgrund von sonstigen äußeren Einflüssen gänzlich unterbunden werden kann.

Alternativ oder zusätzlich kann auch ein Aktuator am Sattel und/oder am oder im Sattelrohr angebracht sein, der die Position des Sattels sowohl in horizontaler als auch in Kipppositionen verändern kann. Hierdurch ist es möglich, denn Sattel bei einem drohenden Überschlag nach unten zu verfahren, so dass der Massenschwerpunkt tiefer gelegt wird, um so das Abheben des Hinterrads zu erschweren.

Zur Erkennung der Drehbewegung kann wenigstens eine physikalische Größe am Zweirad herangezogen werden. So kann beispielsweise aus einer Drehwinkelgröße, einer Inertialgröße, einer Beschleunigungsgröße, eine Neigungsgröße und/oder einer Geschwindigkeitsgröße insbesondere um die Querachse y die Drehbewegung abgeleitet werden. Besonders hilfreich ist dabei, wenn die zeitliche Ableitung der jeweiligen Größe verwendet wird, d.h. die Veränderung über der Zeit. Zur Ableitung der Drehbewegung kann sowohl die absolute Größe aber auch das Überschreiten eines Schwellenwerts dieser Größe oder einer Kombination von Größen berücksichtigt werden.

Zusätzlich können jedoch auch weitere physikalische und/oder fahrdynamische Größen zur Ermittlung des bevorstehenden Überschlags bzw. der Ermittlung der Drehbewegung herangezogen werden. So ist denkbar, die Geschwindigkeit des Zweirads, die Verzögerung, die Steigung und/oder Bremskraft an wenigstens einem Rad hierfür zu berücksichtigen. Weiterhin ist möglich, auch die Betätigung einer Verzögerungseinrichtung wie beispielsweise den Bremshebel zu erfassen, um einen bevorstehende Überschlag bzw. eine kritische Situation für solch einen Überschlag zu erkennen.

Zur Veränderung der Massenverteilung ist optional die Erfassung der tatsächlichen Massenverteilung vor dem drohenden Überschlag notwendig. Hierzu können mit einem oder mehreren Sensoren die Massen am Zweirad aufgenommen und bei der Ansteuerung der Aktuatoren berücksichtigt werden. Denkbar sind hierbei beispielsweise Gewichtssensoren im oder am Sattel bzw. am Gepäckträger. Alternativ oder zusätzlich ist eine Massenverteilung auch aus fahrdynamischen Größen ableitbar, z.B. aus der Geschwindigkeitsgröße bei verschiedenen Beschleunigungs- bzw. Verzögerungsvorgängen. Darüber hinaus ist die Ableitung der Masse und deren Verteilung auch aus Betätigungsgrößen der Pedalen, wie beispielsweise Kraftgrößen und/oder Drehmomentengrößen, möglich.

Weitere Vorteile ergeben sich aus der nachfolgenden Beschreibung von Ausführungsbeispielen bzw. aus den abhängigen Patentansprüchen.

### Kurze Beschreibung der Zeichnungen

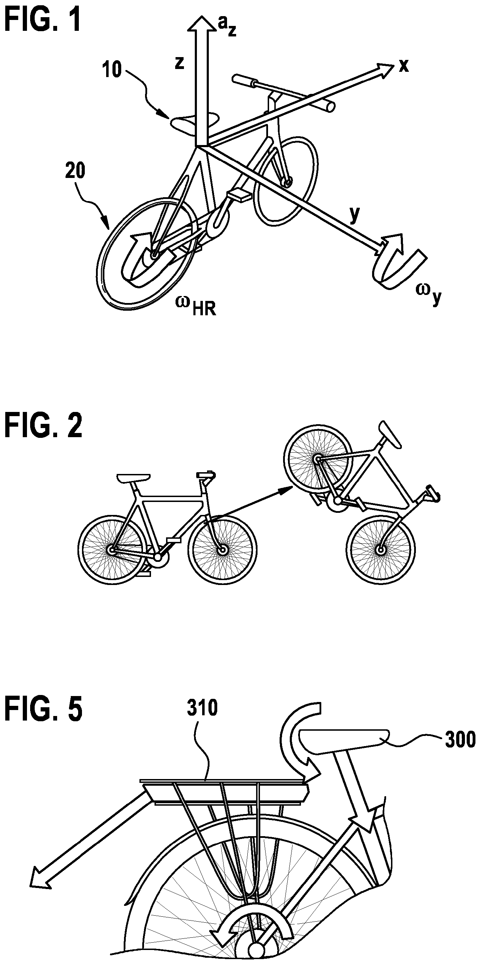

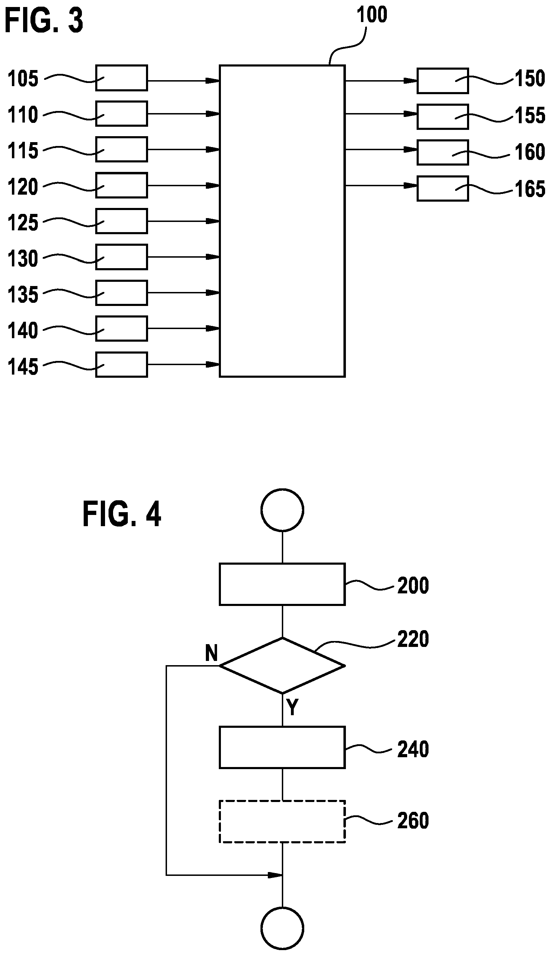

Die Figur 1 zeigt ein Zweirad mit den für die vorliegende Erfindung wesentlichen physikalischen Größen. In der Figur 2 wird schematisch ein Überschlag des Zweirads dargestellt. Die Figur 3 zeigt eine Vorrichtung, die das erfindungsgemäße Verfahren gemäß dem Ablaufdiagramm der Figur 4 umsetzt. Anhand der Figur 5 werden die Möglichkeiten aufgezeigt, wie eine Veränderung der Masseverteilung am Zweirad gemäß der vorliegenden Erfindung ermöglicht werden kann.

### Ausführungsbeispiele

Anhand der Figur 1 können die für die vorliegende Erfindung wesentlichen Größen bei einem Zweirad, z.B. einem mittels eines elektrischen Antriebs betriebenen Fahrrads, vorgestellt werden. Für die Erkennung des Abhebens des Hinterrads (HR) 20 bzw. der Erkennung eines Überschlags in Fahrtrichtung x um die Querachse y des Zweirads 10 wird eine Drehbewegung ω_{y} erkannt. Das erfindungsgemäße Verfahren kann dabei auch dann eingreifen, falls die erkannte Drehbewegung ω_{y} zwar ein Abheben ermöglicht, jedoch nicht zu einem Überschlag ausreicht, wie es in Figur 2 dargestellt wird.

Für die Durchführung der Erkennung des Abhebens des Hinterrads 20 bzw. zur Erkennung eines bevorstehenden oder drohenden Überschlags des Zweirads 10 ist eine Vorrichtung 100 gemäß der Figur 3 vorgesehen. Diese Vorrichtung 100, z.B. ein Steuergerät, weist eine Recheneinheit auf, die aufgrund von wenigstens einer fahrdynamischen Größe bzw. deren zeitlichen Veränderung das Abheben des Hinterrads 20 detektiert und den Überschlag bzw. zumindest eine sicherheitskritische Situation detektiert. Basierend auf dem Abheben, dem prognostizierten Überschlag und/oder der sicherheitskritischen Situation veranlasst die Recheneinheit die Aktivierung wenigstens einer geeigneten Gegenmaßnahme, z.B. indem ein Aktuator 150 am Sattel 300, ein Aktuator 155 am Gepäckträger 310, eine Bremse 160 und/oder der Motor 165 des Zweirads 10 angesteuert werden.

Zur Ermittlung des Abhebens des Hinterrads und zur Beurteilung eines möglichen Überschlags bzw. einer sicherheitskritischen Situation kann die Vorrichtung 100 bzw. die Recheneinheit eine oder mehrere fahrdynamische Sensorgrößen von am Zweirad angebrachten Sensoren erfassen. Besonders ist hierbei ein Beschleunigungssensor 125 geeignet, der die Beschleunigung a_{z} in z-Richtung, d.h. nach oben erfasst. Eine derartige Beschleunigung in z-Richtung impliziert, dass das Hinterrad 20 vom Boden abhebt. Darüber hinaus kann jedoch vorgesehen sein, dass der Beschleunigungssensor 125 auch die Beschleunigungen in den anderen Raumrichtungen erfasste, vorzugsweise in x-Richtung, um die Verzögerung des Zweirads beispielsweise durch einen Bremsvorgang zu erfassen. Selbstverständlich kann jedoch auch vorgesehen sein, dass die Beschleunigung in x-Richtung durch einen gesonderten Beschleunigungssensor erfasst wird. Alternativ oder zusätzlich kann die Verzögerung auch in Abhängigkeit von der Betätigung einer Bremsvorrichtung abgeleitet werden. Hierzu sind im Griff und/oder im Bremshebel am Lenker des Zweirads entsprechende Sensoren 105 untergebracht, die ein Maß für die gewünschte Verzögerung liefern. Hierbei können beispielsweise Druck- und/oder Kraftsensoren zum Einsatz kommen. Derartige Sensoren können auch direkt an den Bremsen angebracht sein, um die tatsächliche Bremswirkung bzw. Bremskraft zu erfassen.

Aus der Beschleunigung in x-Richtung kann ebenfalls die Geschwindigkeit des Zweirads in Fahrtrichtung abgeleitet werden, welche ebenfalls zur Erkennung eine Überschlags bzw. einer sicherheitskritischen Situation herangezogen werden kann. Alternativ hierzu kann auch die Geschwindigkeitsgröße eines Geschwindigkeitssensors 120 erfasst werden, z.B. mit Hilfe eines Magnetsensors. Darüber hinaus ist auch die Erfassung der Steigung und/oder der Neigung mittels eines Neigungssensors 130 sinnvoll, da beispielsweise gerade bei Hangabfahrten ein zu schneller Bremsvorgang zu einem Überschlag führen kann. Mit einem Intertialsensor 135, wie beispielsweise einem Drehratensensor, kann die Drehung des Zweirads um die Drehachse y auch direkt erfasst werden. Alternativ kann mit einem weiteren Drehratensensor auch die Drehung ω_{HR} des Hinterrads erfasst und bei der Ermittlung eines Überschlags berücksichtigt werden. Zusätzlich kann auch die Sensorgröße eines Drucksensors 140 und/oder eines Drehmomentsensors 145 für die Ermittlung erfasst werden, beispielsweise zur Erfassung der Tretbelastung der Kurbel.

Optional kann die Vorrichtung 100 auch das auf dem Zweirad befindliche Gewicht erfassen. Hierzu kann der Sattel einen ersten Gewichtssensor 110 und/oder der Gepäckträger wenigstens einen zweiten Gewichtssensor 115 aufweisen. Durch die Verwendung von mehreren Gewichtssensoren kann dabei eine genauere Information über die Verteilung des Gewichts auf dem Zweirad abgeleitet werden. Die entsprechende Information kann in der Recheneinheit verarbeitet, gespeichert und für die Ansteuerung der Aktuatoren 150 und 155 verwendet werden.

Der Algorithmus zur Erkennung des Abhebens des Hinterrads bzw. zur Ableitung eines möglichen Überschlags bzw. potentieller sicherheitskritischer Situationen wird im Flussdiagramm der Figur 4 näher ausgeführt. In einem ersten Schritt 200 wird wenigstens eine fahrdynamische Größe erfasst, die es ermöglicht, die Drehbewegung ω_{y} bzw. das Abheben des Hinterrads zu detektieren. Wie bereits vorstehend ausgeführt, können das u.a. die Beschleunigung a_{z} des Fahrrads in z-Richtung, die Drehbewegung ω_{y}, die Geschwindigkeit vₓ oder v_{z} bzw. andere geeignete Sensorgrößen sein. Anhand wenigstens einer diese Sensorgrößen oder deren zeitlichen Veränderung kann im nächsten Schritt 240 erkannt werden, ob die Gefahr besteht, dass das Hinterrad abhebt, ein Überschlag bevorsteht und/oder eine sicherheitskritische Situation besteht. Falls im Schritt 240 die erfasste Sensorgröße einen für diese Sensorgröße jeweiligen vorbestimmten Schwellenwert nicht überschreitet oder in Zusammenschau mehrerer Sensorgrößen die notwendige Voraussetzung nicht erfüllt, wird der Algorithmus beendet oder von neuem mit dem Schritt 200 gestartet.

Wird jedoch aufgrund der erfassten Sensorgrößen bzw. dem Überschreiten von einem oder mehreren Schwellenwerten erkannt, dass ein Abheben des Hinterrads, ein möglicher Überschlag oder eine sicherheitskritische Situation vorliegt, wird im nachfolgenden Schritt 240 wenigstens ein Aktuator 150 bzw. 155 angesteuert, um eine Masseverschiebung am Zweirad zu ermöglichen. Hierzu ist notwendig, dass mit den Aktuatoren tatsächlich eine nennenswerte Masse bewegt werden kann. So ist beispielsweise davon auszugehen, dass bei einem normalen Betrieb des Fahrrads der Fahrer auf dem Sattel sitzt, so dass ein Herunterfahren des Sattels zu einer Schwerpunktverlagerung nach unten führt, die einer Aufwärtsbewegung des hinteren Teils des Zweirads entgegen wirkt. Ähnlich würde auch eine Verkippung des Sattels nach vorne oder hinten wirken. Die Ansteuerung eines Aktuators am Gepäckträger 310 macht hingegen nur Sinn, wenn auf oder an diesem auch eine entsprechende Masse vorhanden ist. Hierzu kann, wie ebenfalls beim Sattel 300, im Schritt 200 erfasst werden, wie groß die entsprechende Masse ist, die diesem Aktuator zugeordnet ist. Zur Reduzierung der Drehbewegung um die Drehachse y oder zur Erzeugung eines Gegen(dreh)moments könnte beispielsweise ein mit Gewicht beladener Gepäckträger 310, z.B. mit einem Gepäckträgerakkumulators eines Elektrofahrrads und/oder Gepäckträgertaschen, nach hinten oder nach unten gefahren werden. Nach der Ansteuerung des wenigstens einen Aktuators kann das Verfahren beendet oder von neuem gestartet werden.

Alternativ kann vorgesehen sein, dass nach dem Schritt 240 die Bremse 160 und/oder der Motor 165 des Zweirads angesteuert werden, um den Überschlag bzw. das Abheben des Hinterrads zu unterbinden oder das Ausmaß zu verringern. Dabei kann sowohl eine (kurzzeitige) Aktivierung und/oder Deaktivierung der Bremse und/oder des Motors vorgesehen sein.

In einem weiteren Ausführungsbeispiel kann im Schritt 220 die Fahrsituation des Zweirads berücksichtigt werden. Hierbei kann beispielsweise eine im Schritt 200 erfasste Steigung/Neigung, ein Druck auf die Pedale, ein durchzuführender oder bereits laufender Bremsvorgang und/oder die Geschwindigkeit des Zweirads berücksichtigt werden, um eine genauere Prognose über das Abheben des Hinterrads, einen möglichen Überschlag und/oder eine sicherheitskritische Information zu bekommen.

Zur Erkennung des Abhebens des Hinterrads im Schritt 220 könnte je nach Verfügbarkeit der zugrunde liegenden Sensorgrößen eine der folgenden Prüfungen durchgeführt werden:
ω_{HR}=0 oder a_{z} >0 oder ω_{y}=0
ω_{HR}=0 und a_{z} >0 oder ω_{y} =0
ω_{HR}=0 oder a_{z} >0 und ω_{y} =0
ω_{HR}=0 und a_{z}>0 und ω_{y} =0

Weiterhin kann im Schritt 240 auch in Abhängigkeit der Massenverteilung auf oder am Zweirad eine gezielte Änderung der Massenverteilung über die Ansteuerung der Aktuatoren erreicht werden. So ist denkbar, dass eine für die jeweilige Situation angepasste und optimierte Sitzstellung bzw. Sitzposition des Sattels eingestellt wird. Diese Optimierung kann beispielsweise in Abhängigkeit der ermittelten und zu erreichenden optimalen Schwerpunktlage erreicht werden. Hierzu kann auch die Erfassung einer Sensorgröße dienen, die die aktuelle Sattelposition aufnimmt.

Weiterhin ist denkbar, im Schritt 240 die Fahrerposition bei der Ableitung der Ansteuerung der Aktuatoren zu berücksichtigen. So könnte mit einem geeigneten Sensor die Präsenz und der Druck der Hände am Lenker erfasst werden, um beispielsweise den Schwerpunkt des Fahrerkörpers zu ermitteln.

Als Aktuatoren 150 und 155 am Zweirad bieten sich Piezoaktuatoren, elektrische, hydraulische oder pneumatische Linearaktuatoren, elektroaktive Polymere und/oder elektromechanische Verriegelungen, z.B. mittels Magnetschalter an.

Die Prüfung in Schritt 220 bzw. der Start des Algorithmus kann in einem Ausführungsbeispiel auch davon abhängig gemacht werden, inwieweit bestimmte Voraussetzung erfüllt sind, die ein Abheben des Hinterrads, ein Überschlag oder eine sicherheitskritische Situation tatsächlich ermöglicht. So könnte vor dem Start der Algorithmus oder im Schritt 200 erfasst werden, ob das Zweirad eine Mindestgeschwindigkeit aufweist. Je geringer die Geschwindigkeit des Zweirads ist, desto geringer ist auch das Auftreten der geschilderten Situationen. Denkbar ist beispielsweise, dass eine Mindestgeschwindigkeit von 6 bis 10 km/h überschritten sein muss, bevor der Algorithmus gestartet bzw. im Schritt 220 die vorstehenden Situationen erkannt werden. Weiterhin kann die in Schritt 240 vorgesehene Aktivierung wenigstens eines Aktuators von der detektierten Geschwindigkeit abhängen. So ist denkbar, dass bei hohen Geschwindigkeiten der Sattel zumindest nicht in extreme Positionen verfahren wird, um die Beherrschbarkeit des Zweirads nicht zu beeinträchtigen.

In einer weiteren Ausgestaltung kann auch die Erfassung der Bremskraftverteilung relevant für den Start des Algorithmus bzw. die Erkennung der vorgenannten Situationen in Schritt 250 sein. So kann das Verfahren abgebrochen werden, wenn erkannt wird, dass nur am hinteren Rad gebremst wird, da in dieser Situation ein Überschlag stattfinden kann. Eine ähnliche Betrachtung kann angestellt werden, falls mittels eines Neigungssensors 130 erkannt wird, dass das Zweirad bergauf fährt.

## Patentansprüche

1. Verfahren zur Verhinderung eines Überschlags bei einem Zweirad (10), wobei
• zur Erkennung (220) eines Abhebens des Hinterrads (20) des Zweirads (10) eine Drehbewegung um die Querachse (y) des Zweirads (10) ermittelt wird, **dadurch gekennzeichnet dass**
• zur Verhinderung des Überschlags wenigstens ein Aktuator (150, 155) derart angesteuert (240) wird, dass eine Veränderung der Massenverteilung auf und/oder an dem Zweirad (10) erfolgt.

2. Verfahren nach Anspruch 1, **dadurch gekennzeichnet, dass** der Aktuator derart angesteuert wird, dass die Veränderung der Massenverteilung die Drehbewegung des Zweirads (10) um die Querachse (y) reduziert.

3. Verfahren nach Anspruch 1 oder 2, **dadurch gekennzeichnet, dass** die Drehbewegung in Abhängigkeit von einer Drehwinkelgröße, einer Inertialgröße, einer Beschleunigungsgröße, einer Neigungsgröße und/oder einer Geschwindigkeitsgröße um die Querachse (y) ermittelt wird, wobei insbesondere vorgesehen ist, dass die Drehbewegung in Abhängigkeit von der zeitlichen Ableitung der jeweiligen erfassten Größe ermittelt wird.

4. Verfahren nach einem der vorherigen Ansprüche, **dadurch gekennzeichnet, dass** die Erkennung des bevorstehenden Überschlags zusätzlich in Abhängigkeit einer Verzögerungsgröße des Zweirads (10), einer Bremskraftgröße an wenigstens einem Rad und/oder einer Betätigung einer Verzögerungseinrichtung (105) des Zweirads (10) erfolgt.

5. Verfahren nach einem der vorherigen Ansprüche, **dadurch gekennzeichnet, dass** wenigstens eine Massenverteilungsgröße ermittelt wird, welche die Masseverteilung auf und/oder an dem Zweirad (10) repräsentiert und bei der Ansteuerung des wenigstens einen Aktuators (150, 155) berücksichtigt wird, wobei die Masseverteilung insbesondere wenigstens in Abhängigkeit von einer Gewichtsgröße, einer Beschleunigungsgröße, einer Geschwindigkeitsgröße, einer Kraftgröße, einer Drehmomentengröße, einer Druckgröße und/oder einer fahrdynamischen Größe ermittelt wird, insbesondere in Abhängigkeit der zeitlichen Ableitung einer dieser Größen.

6. Zweirad (10) mit einem Steuergerät (100) und wenigstens einem Aktuator (150, 155), wobei das Steuergerät (100) dazu eingerichtet ist, ein Verfahren zur Verhinderung eines Überschlags nach einem der Ansprüche 1 bis 5 auszuführen und der Aktuator (150, 155) dazu eingerichtet ist, eine Masseverteilung auf und/oder an dem Zweirad (10) zu verändern, wobei das Steuergerät
• zur Erkennung eines Abhebens des Hinterrads (20) des Zweirads (10) eine Drehbewegung um die Querachse (y) des Zweirads (10) ermittelt und
• zur Verhinderung des Überschlags den wenigstens einen Aktuator (150, 155) derart ansteuert, dass eine Veränderung der Massenverteilung auf und/oder an dem Zweirad (10) erfolgt.

7. Zweirad (10) nach Anspruch 6, **dadurch gekennzeichnet, dass** der wenigstens eine Aktuator (150, 155) derart angesteuert wird, dass die Veränderung der Massenverteilung die Drehbewegung des Zweirads (10) um die Querachse (y) reduziert.

8. Zweirad (10) nach Anspruch 6 oder 7, **dadurch gekennzeichnet, dass** das Steuergerät (100) mittels eines am Zweirad (10) befindlichen
• Drehwinkelsensors eine Drehwinkelgröße, und/oder
• Inertialsensors (135) eine Intertialsensorgröße, und/oder
• Beschleunigungssensors (125) eine Beschleunigungsgröße, und/oder
• Neigungssensors (130) eine Neigungsgröße, und/oder
• Geschwindigkeitssensors (120) eine Geschwindigkeitsgröße
erfasst und in Abhängigkeit von der erfassten Größe und/oder deren zeitlichen Ableitung die Drehbewegung ermittelt.

9. Zweirad (10) nach einem der Ansprüche 6 bis 8, **dadurch gekennzeichnet, dass** das Steuergerät (100) zusätzlich mittels
• eines Verzögerungssensors die Verzögerungsgröße des Zweirads, und/oder
• eines Bremskraftsensors eine Bremskraftgröße an wenigstens einem Rad und/oder
• eines Betätigungssensors (105) eine Betätigung einer Verzögerungseinrichtung (105) des Zweirads (10)
erfasst und den bevorstehenden Überschlag zusätzlich in Abhängigkeit der erfassten Größe erkennt.

10. Zweirad nach einem der Ansprüche 6 bis 9, **dadurch gekennzeichnet, dass** das Steuergerät (100) eine Massenverteilungsgröße ermittelt, welche die Masseverteilung auf und/oder an dem Zweirad (10) repräsentiert und bei der Ansteuerung des wenigstens einen Aktuators (150, 155) berücksichtigt wird, wobei die Masseverteilung insbesondere wenigstens in Abhängigkeit von einer erfassten Gewichtsgröße, Beschleunigungsgröße, Geschwindigkeitsgröße, Kraftgröße, Drehmomentengröße, Druckgröße und/oder fahrdynamischen Größe ermittelt wird, insbesondere in Abhängigkeit der zeitlichen Ableitung einer dieser Größen.

11. Zweirad nach einem der Ansprüche 6 bis 10, **dadurch gekennzeichnet, dass** ein Aktuator (150) am Sattel (400) und/oder am oder im Sattelrohr angeordnet ist, der dazu eingerichtet ist, den Sattel in der Höhe zu verstellen und/oder um die Querachse zu verkippen.

12. Zweirad nach einem der Ansprüche 6 bis 11, **dadurch gekennzeichnet, dass** ein Aktuator (150) am Gepäckträger (310) vorgesehen ist, der dazu eingerichtet ist, den Gepäckträger (310) und/oder auf und/oder an dem Gepäckträger (310) befindlichen Masse zu bewegen, insbesondere nach hinten und/oder zur Fahrbahn hin.

13. Zweirad nach einem der Ansprüche 6 bis 12, **dadurch gekennzeichnet, dass** wenigstens ein Sensor vorgesehen ist, welche eine Gewichtsgröße erfasst, wobei insbesondere vorgesehen ist, dass der Sensor am Sattel (300) und/oder am Gepäckträger (310) angeordnet ist.

## Claims

1. Method for preventing a rollover in a bicycle (10),
• a rotational movement about the transverse axis (y) of the bicycle (10) being determined in order to detect (220) lifting of the rear wheel (20) of the bicycle (10),
**characterized in that**
• to prevent the rollover, at least one actuator (150, 155) is driven (240) in such a way that a change in the mass distribution upon and/or on the bicycle (10) is carried out.

2. Method according to Claim 1, **characterized in that** the actuator is driven in such a way that the change in the mass distribution reduces the rotational movement of the bicycle (10) about the transverse axis (y).

3. Method according to Claim 1 or 2, **characterized in that** the rotational movement is determined as a function of a rotational angle variable, an inertial variable, an acceleration variable, an inclination variable and/or a speed variable about the transverse axis (y), wherein provision is made in particular for the rotational movement to be determined as a function of the time derivative of the respective detected variable.

4. Method according to one of the preceding claims, **characterized in that** the detection of the impending rollover is additionally carried out as a function of a deceleration variable of the bicycle (10), a braking force variable on at least one wheel and/or an actuation of a deceleration device (105) of the bicycle (10).

5. Method according to one of the preceding claims, **characterized in that** at least one mass distribution variable is determined, which represents the mass distribution upon and/or on the bicycle (10) and is taken into account in driving the at least one actuator (150, 155), wherein the mass distribution is determined in particular at least as a function of a weight variable, an acceleration variable, a speed variable, a force variable, a torque variable, a pressure variable and/or a riding-dynamics variable, in particular as a function of the time derivative of one of these variables.

6. Bicycle (10) having a controller (100) and at least one actuator (150, 155), wherein the controller (100) is configured to carry out a method for preventing a rollover according to one of Claims 1 to 5, and the actuator (150, 155) is configured to change a mass distribution upon and/or on the bicycle (10), wherein the controller
• determines a rotational movement about the transverse axis (y) of the bicycle (10) in order to detect lifting of the rear wheel (20) of the bicycle (10), and
• to prevent the rollover, drives the at least one actuator (150, 155) in such a way that a change in the mass distribution upon and/or on the bicycle (10) is carried out.

7. Bicycle (10) according to Claim 8, **characterized in that** the at least one actuator (155, 155) is driven in such a way that the change in the mass distribution reduces the rotational movement of the bicycle (10) about the transverse axis (y).

8. Bicycle (10) according to Claim 6 or 7, **characterized in that** the controller (100) detects
• a rotational angle variable by means of a rotational angle sensor, and/or
• an inertial sensor variable by means of an inertial sensor (135), and/or
• an acceleration variable by means of an acceleration sensor (125), and/or
• an inclination variable by means of an inclination sensor (130), and/or
• a speed variable by means of a speed sensor (120)
located on the bicycle (10), and determines the rotational movement as a function of the detected variable and/or its time derivative.

9. Bicycle (10) according to one of Claims 6 to 8, **characterized in that** the controller (100) additionally detects
• a deceleration variable of the bicycle by means of a deceleration sensor, and/or
• a braking force variable on at least one wheel by means of a braking force sensor, and/or
• an actuation of a deceleration device (105) of the bicycle (10) by means of an actuation sensor (105),
and detects the impending rollover additionally as a function of the detected variable.

10. Bicycle according to one of Claims 6 to 9, **characterized in that** the controller (100) determines a mass distribution variable which represents the mass distribution upon and/or on the bicycle (10) and is taken into account in driving the at least one actuator (150, 155), wherein the mass distribution is determined in particular at least as a function of a detected weight variable, acceleration variable, speed variable, force variable, torque variable, pressure variable and/or riding-dynamics variable, in particular as a function of the time derivative of one of these variables.

11. Bicycle according to one of Claims 6 to 10, **characterized in that** an actuator (150) is arranged on the saddle (400) and/or on or in the saddle tube, and is configured to adjust the height of the saddle and/or to tilt it about the transverse axis.

12. Bicycle according to one of Claims 6 to 11, **characterized in that** an actuator (150) is provided on the luggage carrier (310), and is configured to move the luggage carrier (310) and/or a mass located on the luggage carrier (310), in particular to the rear and/or towards the roadway.

13. Bicycle according to one of Claims 6 to 12, **characterized in that** at least one sensor which detects a weight variable is provided, wherein provision is in particular made for the sensor to be arranged on the saddle (300) and/or on the luggage carrier (310).

## Revendications

1. Procédé permettant d'empêcher un retournement d'un deux-roues (10), dans lequel
- pour la reconnaissance (220) d'un soulèvement de la roue arrière (20) du deux-roues (10), un mouvement de rotation autour de l'axe transversal (y) du deux-roues (10) est détecté, **caractérisé en ce que**
- pour empêcher le retournement, au moins un actionneur (150, 155) est commandé (240) de telle sorte qu'une modification de la distribution de masse sur le deux-roues (10) et/ou au niveau de celui-ci soit effectuée.

2. Procédé selon la revendication 1, **caractérisé en ce que** l'actionneur est commandé de telle sorte que la modification de la distribution de masse réduise le mouvement de rotation du deux-roues (10) autour de l'axe transversal (y).

3. Procédé selon la revendication 1 ou 2, **caractérisé en ce que** le mouvement de rotation est déterminé en fonction d'une grandeur d'angle de rotation, d'une grandeur inertielle, d'une grandeur d'accélération, d'une grandeur d'inclinaison et/ou d'une grandeur de vitesse autour de l'axe transversal (y), le mouvement de rotation étant déterminé en particulier en fonction de la dérivée dans le temps de la grandeur détectée respective.

4. Procédé selon l'une des revendications précédentes, **caractérisé en ce que** la reconnaissance du retournement imminent s'effectue en outre en fonction d'une grandeur de décélération du deux-roues (10), d'une grandeur de force de freinage au niveau d'au moins une roue et/ou d'un actionnement d'un dispositif de décélération (105) du deux-roues (10).

5. Procédé selon l'une des revendications précédentes, **caractérisé en ce qu'**au moins une grandeur de distribution de masse est déterminée, laquelle représente la distribution de masse sur le deux-roues (10) et/ou au niveau de celui-ci et est prise en compte lors de la commande de l'au moins un actionneur (150, 155), la distribution de masse étant déterminée en particulier en fonction d'une grandeur de poids, d'une grandeur d'accélération, d'une grandeur de vitesse, d'une grandeur de force, d'une grandeur de couple, d'une grandeur de pression et/ou d'une grandeur de dynamique de conduite, en particulier en fonction de la dérivée dans le temps de l'une de ces grandeurs.

6. Deux-roues (10) comprenant un appareil de commande (100) et au moins un actionneur (150, 155), dans lequel l'appareil de commande (100) est conçu pour mettre en oeuvre un procédé permettant d'empêcher un retournement selon l'une des revendications 1 à 5 et l'actionneur (150, 155) est conçu pour modifier une distribution de masse sur le deux-roues (10) et/ou au niveau de celui-ci, dans lequel l'appareil de commande
- détecte un mouvement de rotation autour de l'axe transversal (y) du deux-roues (10) pour la reconnaissance d'un soulèvement de la roue arrière (20) du deux-roues (10) et
- pour empêcher le retournement, commande l'au moins un actionneur (150, 155) de telle sorte qu'une modification de la distribution de masse sur le deux-roues (10) et/ou au niveau de celui-ci soit effectuée.

7. Deux-roues (10) selon la revendication 6, **caractérisé en ce que** l'au moins un actionneur (150, 155) est commandé de telle sorte que la modification de la distribution de masse réduise le mouvement de rotation du deux-roues (10) autour de l'axe transversal (y).

8. Deux-roues (10) selon la revendication 6 ou 7, **caractérisé en ce que** l'appareil de commande (100) détecte
- une grandeur d'angle de rotation au moyen d'un capteur d'angle de rotation se trouvant sur le deux-roues (10) et/ou
- une grandeur de capteur inertiel au moyen d'un capteur inertiel (135) se trouvant sur le deux-roues et/ou
- une grandeur d'accélération au moyen d'un capteur d'accélération (125) se trouvant sur le deux-roues et/ou
- une grandeur d'inclinaison au moyen d'un capteur d'inclinaison (130) se trouvant sur le deux-roues et/ou
- une grandeur de vitesse au moyen d'un capteur de vitesse (120) se trouvant sur le deux-roues et détecte le mouvement de rotation en fonction de la grandeur détectée et/ou de sa dérivée dans le temps.

9. Deux-roues (10) selon l'une des revendications 6 à 8, **caractérisé en ce que** l'appareil de commande (100) détecte en outre
- la grandeur de décélération du deux-roues au moyen d'un capteur de décélération et/ou
- une grandeur de force de freinage au niveau d'au moins une roue au moyen d'un capteur de force de freinage et/ou
- un actionnement d'un dispositif de décélération (105) du deux-roues (10) au moyen d'un capteur d'actionnement (105)
et reconnaît le retournement imminent en outre en fonction de la grandeur détectée.

10. Deux-roues selon l'une des revendications 6 à 9, **caractérisé en ce que** l'appareil de commande (100) détecte une grandeur de distribution de masse, laquelle représente la distribution de masse sur le deux-roues (10) et/ou au niveau de celui-ci et est prise en compte lors de la commande de l'au moins un actionneur (150, 155), la distribution de masse étant déterminée en particulier au moins en fonction d'une grandeur de poids, d'une grandeur d'accélération, d'une grandeur de vitesse, d'une grandeur de force, d'une grandeur de couple, d'une grandeur de pression et/ou d'une grandeur de dynamique de conduite détectée, en particulier en fonction de la dérivée dans le temps de l'une de ces grandeurs.

11. Deux-roues selon l'une des revendications 6 à 10, **caractérisé en ce qu'**un actionneur (150) est disposé sur la selle (400) et/ou sur ou dans le tube de selle, lequel actionneur est conçu pour déplacer la selle en hauteur et/ou pour l'incliner autour de l'axe transversal.

12. Deux-roues selon l'une des revendications 6 à 11, **caractérisé en ce qu'**un actionneur (150) est prévu sur le porte-bagages (310), lequel actionneur est conçu pour déplacer le porte-bagages (310) et/ou une masse se trouvant sur le porte-bagages (310) et/ou au niveau de celui-ci, en particulier vers l'arrière et/ou vers la chaussée.

13. Deux-roues selon l'une des revendications 6 à 12, **caractérisé en ce qu'**au moins un capteur est prévu, lequel détecte une grandeur de poids, le capteur étant en particulier disposé sur la selle (300) et/ou sur le porte-bagages (310).
